# EUROPÄISCHE PATENTSCHRIFT

(11) **EP 2 846 439 B1**
(45) Veröffentlichungstag und Bekanntmachung des Hinweises auf die Patenterteilung: **02.12.2020**
(21) Anmeldenummer: 13183706.4
(22) Anmeldetag: 10.09.2013
(51) Int. Cl.: H02K 7/00, H02K 9/193

(54) **Elektrische Maschine mit einer Welle**
Electric machine with a shaft
Machine électrique dotée d'un arbre

(43) Veröffentlichungstag der Anmeldung: 11.03.2015
(73) Patentinhaber: Siemens Aktiengesellschaft, 80333 München (DE)
(72) Erfinder: Büttner, Klaus, 97618 Hollstadt (DE); Walter, Steffen, 85667 Oberpframmern (DE)

(56) Entgegenhaltungen:
- EP-A1- 0 989 658
- EP-A2- 1 870 989
- DE-C1- 19 900 559
- JP-A- 2004 336 989
- US-A- 4 353 002

## Beschreibung

Die Erfindung betrifft eine elektrische Maschine gemäß dem Oberbegriff des Anspruchs 1. Die Erfindung betrifft auch eine Serie von elektrischen Maschinen umfassend mindestens die elektrische Maschine. Ferner betrifft die Erfindung ein Verfahren zur Herstellung der elektrischen Maschine.

Eine derartige elektrische Maschine ist aus der DE 10 2006 047 186 A1 bekannt. Es wird dort eine Antriebsmaschine beschrieben, die einen Rotor und einen Stator mit einem elektrischen Wicklungssystem umfasst. Ein Blechpaket mit axial hintereinander gestapelten gestanzten Blechen ist direkt auf eine Außenumfangsfläche eines hohlzylindrischen Rotorbereichs einer Radsatzwelle montiert. Die Radsatzwelle umfasst zwei axial-seitliche Randbereiche mit Achsstummeln und den zwischen den Randbereichen angeordneten hohlzylindrischen Rotorbereich. Die zwei axial-seitlichen Randbereiche sind mit dem hohlzylindrischen Rotorbereich mittels einer Schweißtechnik wie z.B. MAG-Schweißen, UP-Schweißen oder Reibschweißen miteinander verbunden. Die jeweiligen Kontaktstellen zum anderen Wellenteil können dabei insbesondere entsprechend der gewählten Schweißverbindungstechnik ausgestaltet werden. Eine Verbindung mittels Reibschweißen führt dabei zu einem besonders geringen Verzug. Im hohlzylindrischen Rotorbereich kann die durch den zylindrischen Innenhohlraum bedingte Materialeinsparung vorgesehen werden, ohne dass dadurch Einbußen in der mechanischen Stabilität resultieren. Aufgrund des größeren Außendurchmessers im Rotorbereich können hier die durch Torsions- und Biegemomente hervorgerufenen mechanischen Spannungen geringer eingestellt werden, als in den Achsstummeln der zwei axial-seitlichen Randbereichen, die einen kleineren Außendurchmesser haben. Insgesamt hat die Radsatzwelle aufgrund des Innenhohlraums im Rotorbereich ein vergleichsweise geringes Gewicht bei trotzdem hoher mechanischer Stabilität.

Eine derartige elektrische Maschine ist auch aus der US 4 353 002 A bekannt. Die elektrische Maschine dieses Patents ist mit einer auf hohen Temperaturen aufgeheizten rotierenden Maschine, wie beispielsweise einer Heizrolle zur Verarbeitung von Fasern oder einen Ventilator zur Belüftung eines Hochtemperaturofens, usw. verbunden. Die elektrische Maschine umfasst eine Welle, die mit Lagern der elektrischen Maschine drehbar gelagert ist. Die Welle umfasst einen für die Lagerung in den Lagern angepassten ersten Abschnitt aus einem rostfreien Stahl niedriger thermischer Leitfähigkeit und einen zweiten Abschnitt aus einer für Maschinenkonstruktionen verwendeten Stahllegierung wie Chromstahl, Chrommolybdänstahl oder Nickelchromstahl hoher Härte, wobei der erste Abschnitt und der zweite Abschnitt an einer in Bezug auf den Lagern dem Rotor gegenüberliegenden Seite von den Lagern entfernten Verbindungsstelle durch Reibdruckschweißen verbunden sind. Hierzu wurden die zwei Abschnitte aneinandergestoßen und mindestens einer der zwei Abschnitte rotiert, um Reibungswärme zum Verbinden der zwei Abschnitte zu erzeugen. Die Verbindungsstelle ist so gewählt, dass ein wärmeabführender Ventilator oder Kühlrippen usw. auf der Welle zwischen den Lagern und der Verbindungsstelle auf der Welle montiert werden kann. Die zu dem ersten Abschnitt und dem Lager transportierte Wärme der aufgeheizten rotierenden Maschine, z.B. der Heizrolle, wird durch die Abfuhr der Wärme an die Luft durch den Ventilator aus einem Material höherer Wärmeleitfähigkeit, z.B. einer Aluminiumlegierung, und durch die geringe Wärmeleitfähigkeit des ersten Abschnitts minimiert.

In der Veröffentlichung JP 2004 336989 A wird eine Welle aus wenigstens einem zentralen Wellenteil, einen ersten und einen zweiten äußeren Wellenteil zusammengesetzt. Zum Verbinden der Wellenteile wird das erste und zweite Wellenteile jeweils an einem Ende des zentralen hohlen zylinderförmigen Wellenteils in den zentralen hohlen zylinderförmigen Wellenteils hinein gedrückt. Durch die verschiedenen Wellenteile ist es möglich, abhängig von den speziellen Anforderungen an die jeweiligen Wellenteile einzelne Komponenten zur Minimierung der Kosten für Material und Herstellung eines Rotormoduls zu kombinieren.

Aufgrund der Bestrebungen, Kosten unabhängiger von Randbedingungen maßgeblich zu reduzieren, ist es von zentraler Bedeutung einen weiteren technischen Beitrag zu leisten, um allein, alternativ oder in Kombination mit bekannten Maßnahmen eine elektrische Maschine zu verbessern.

Der Erfindung liegt daher die Aufgabe zugrunde, kostengünstig eine individuell den Anforderungen angepasste elektrische Maschine zur Verfügung zu stellen.

Diese Aufgabe wird durch eine elektrische Maschine mit den Merkmalen des Anspruchs 1 gelöst.

Die Aufgabe wird auch durch eine Serie von elektrischen Maschinen mit den Merkmalen nach Anspruch 6 gelöst.
Die Aufgabe wird auch durch ein Verfahren zur Herstellung einer elektrischen Maschine nach Anspruch 7 gelöst.

Die erfindungsgemäße elektrische Maschine löst die Aufgabe vorteilhaft, indem die stoffschlüssige und homogene Verbindung eine materialunabhängige und formunabhängige Verbindung zwischen dem ersten und dem zweiten Abschnitt ermöglicht. Der erste und der zweite Abschnitt der Welle können gemäß den an den Abschnitten der Welle und der Welle als Ganzes gestellten Anforderungen ausgestaltet werden, um kostengünstig eine individuell den Anforderungen angepasste elektrische Maschine zur Verfügung zu stellen.

Bei der erfindungsgemäßen elektrischen Maschine ist das erste Material ein Nicht-Eisen-Metall ist. Es wurde erkannt, dass bei einem stoffschlüssigen und homogenen Verbinden des ersten und zweiten Abschnitts der Welle ein Nichteisenmetall vorteilhaft für den ersten Abschnitt der Welle, an dem der Rotor befestigt ist, zur Erfüllung der Anforderungen einer elektrischen Maschine genutzt werden kann.

Als Nichteisenmetalle werden alle Metalle außer Eisen bezeichnet, sowie Metalllegierungen, in denen Eisen nicht als Hauptelement enthalten ist, bzw. der Anteil an Reineisen (Fe) 50% nicht übersteigt.

Die Welle kann in dem ersten Abschnitt einen Montageabschnitt aufweisen, an dem der Rotor befestigt ist, wobei der Rotor den Montageabschnitt umschließt. Es wurde erkannt, dass so zwischen dem Rotor und der Welle eine drehfeste Verbindung zur Übertragung eines Drehmoments auch bei einer geringen Festigkeit des Nichteisenmetalls möglich ist.

Bei einer erfindungsgemäßen elektrischen Maschine ist das zweite Material ein Eisenmetall. Als Eisenmetalle werden hier Metalle oder Metalllegierungen bezeichnet, die nicht Nichteisenmetalle sind. Zu den Eisenmetallen gehören z.B. Stähle, deren Hauptbestandteil Eisen ist, und der umformtechnisch verarbeitet werden kann. Hier gehören aber auch schmiedbare Metalle zu den Eisenmetallen. Durch die stoffschlüssige und homogene Verbindung an der Stoßstelle des ersten und des zweiten Abschnitts können die Anforderungen an eine erfindungsgemäße elektrische Maschine nahezu in der gleichen Höhe gestellt werden, wie bei einer elektrischen Maschine, deren Welle ausschließlich aus Eisenmetall besteht. Aufgrund der stoffschlüssigen und homogenen Verbindung an der Stoßstelle des ersten und des zweiten Abschnitts genügt es, die Welle in dem zweiten Abschnitt aus einem Eisenmetall zu fertigen, da dort das Eisenmetall aus mechanischen und thermischen Beanspruchungsgründen notwendig ist. Im ersten Abschnitt der Welle sind die Anforderungen an die erfindungsgemäße elektrische Maschine bezüglich mechanischer und thermischer Beanspruchungen anders. Die stoffschlüssige und homogene Verbindung an der Stoßstelle des ersten und zweiten Abschnitts ermöglicht, dass die Welle als Ganzes bzw. die elektrische Maschine als Ganzes die Anforderungen erfüllt.

Die Welle kann im zweiten Abschnitt einen Lagerabschnitt aufweisen, an dem die erste Lagervorrichtung zu drehbaren Lagerung der Welle angeordnet ist. So kann vorteilhaft kostengünstig begrenzt auf dem zweiten Abschnitt der Lagerabschnitt mit hoher Festigkeit und Verschleißfestigkeit für eine wechselnde Belastung ausgeführt werden.

Bei einer erfindungsgemäßen elektrischen Maschine sind der erste und der zweite Abschnitt an der Stoßstelle durch orbitales Reibschweißen stoffschlüssig und homogen verbunden. Mit dem orbitalen Reibschweißen kann vorteilhaft eine stoffschlüssige und homogene Verbindung an der Stoßstelle des ersten und zweiten Abschnitts erreicht werden, wobei die individuellen Anforderungen an elektrische Maschinen kostengünstig erreicht werden können.

Beim orbitalen Reibschweißen als ein Verbindungsverfahren wird ein Energieeintrag durch eine Relativbewegung des ersten und zweiten Abschnitts der Welle mittels einer zirkularen Kreisschwingbewegung des ersten und zweiten Abschnitts oder des ersten bzw. zweiten Abschnitts bewirkt. Der erste und der zweite Abschnitt führen keine Drehung zueinander aus. Durch die Relativbewegung des ersten und zweiten Abschnitts werden durch die dabei entstehende Reibung das erste und das zweite Material erwärmt und plastifiziert. Wenn das erste und das zweite Material entsprechend erwärmt und plastifiziert sind, werden die Teile in der axialen Richtung zueinander positioniert und mittels einer definierten Stauchkraft unter hohem Druck zusammengepresst. Nach dem Erkalten des ersten und des zweiten Materials sind das erste und das zweite Material an der Stoßstelle des ersten und zweiten Abschnitts stoffschlüssig und homogen verbunden.

Beim orbitalen Reibschweißen ist die Geschwindigkeit bei der Relativbewegung des ersten und zweiten Abschnitts nur von einem Durchmesser einer Kreisbahn abhängig. Jeder Punkt der späteren Stoßstelle bewegt sich mit der gleichen Geschwindigkeit, was zu einem gleichmäßigen Energieeintrag in die beiden Materialien führt. Eine abhängig vom Abstand von der Drehachse in radialer Richtung unterschiedliche Ausbildung des Gefüges an der Stoßstelle tritt vorteilhaft nicht oder nur in geringem Maße auf. Unter anderem kann sich so die Stoßstelle vorteilhaft über eine große Länge in radialer Richtung erstrecken. Die große Länge kann insbesondere im Vergleich mit dem Abstand eines Beginns der Stoßstelle von der Drehachse groß sein.

Da sich jeder Punkt der späteren Stoßstelle unabhängig vom Material und der Form des ersten und des zweiten Abschnitts mit der gleichen Geschwindigkeit bewegt, ist die stoffschlüssige und homogene Verbindung durch das orbitale Reibschweißen vorteilhaft unabhängig vom Material und der Form des ersten und des zweiten Abschnitts.

Die stoffschlüssige und homogene Verbindung des ersten Materials und des zweiten Materials an der Stoßstelle ermöglicht die für einen Betrieb der elektrischen Maschine notwendige Kraftübertragung zwischen dem ersten Abschnitt und den zweiten Abschnitt.

Durch die an der Stoßstelle stoffschlüssige und homogene Verbindung werden ortsabhängige Unterschiede in den Eigenschaften der Verbindung vorteilhaft vermieden. Bei einer erfindungsgemäßen elektrischen Maschine kann die Welle mithilfe der ersten Lagervorrichtung in einem ersten Lagerschild und mithilfe der zweiten Lagervorrichtung in einem zweiten Lagerschild gelagert sein. Die Lagerschilde oder ein Gehäuse, das die Lagerschilde aufweist, kann so vorteilhaft als Drehmomentstütze genutzt werden.

Beim Betrieb einer erfindungsgemäßen elektrischen Maschine als Generator wird der Rotor durch mechanische Energie in Drehung versetzt. Durch ein magnetisches Zusammenwirken zwischen Rotor und Stator kann die mechanische in elektrische Energie umgewandelt werden. Die elektrische Energie kann an einer Wicklung, die am Stator befestigt ist, durch Anschließen eines elektrischen Verbrauchers entnommen werden.

Beim Betrieb einer erfindungsgemäßen elektrischen Maschine als Motor wird über die Wicklung elektrische Energie zugeführt und durch das magnetische Zusammenwirken zwischen Stator und Rotor elektrische Energie in mechanische Energie umgewandelt. Dabei wird der Rotor in Drehung versetzt und es kann an der Welle mechanische Energie an einen mechanischen Verbraucher in Form einer Drehbewegung abgegeben werden.

Das magnetische Zusammenwirken zwischen Rotor und Stator kann über einen Luftspalt erfolgen, der in radialen Richtungen, die senkrecht zur axialen Richtung orientiert sind, durch den Stator und den Rotor begrenzt ist. Der Rotor kann eine entsprechende Einrichtung aufweisen, um über den Luftspalt mit dem Stator, insbesondere der am Stator befestigten Wicklung, magnetisch zusammenwirken zu können. Die Einrichtung kann hierfür einen Permanentmagneten und/oder eine Wicklung aufweisen.

Eine Welle für eine erfindungsgemäße elektrische Maschine weist auch den weiteren Vorteil auf, dass ein Durchmesser der Welle in radialen Richtungen, insbesondere auch an der Stoßstelle, durch einen Bearbeitungsschritt den Anforderungen der elektrischen Maschine angepasst reduziert werden kann. Aufgrund der stoffschlüssigen und homogenen Verbindung verursacht die Bearbeitung der Welle keine erhebliche oder zufällige Verringerung der Belastungsfähigkeit der Welle durch Biegung, Torsion oder gegebenenfalls Druck im Betrieb einer elektrischen Maschine mit der erfindungsgemäßen Welle. Eine erhebliche oder zufällige Belastung könnte durch ortsabhängige Unterschiede in den Eigenschaften der Verbindung auftreten, wenn die Verbindung an der Stoßstelle in radialen Richtungen Stellen aufwiese, die keine oder in geringerem Maße belastbare stoffschlüssige Verbindung aufwiese als andere Stellen der Stoßstelle. Eine erhebliche oder zufällige Verringerung der Belastungsfähigkeit der Welle könnte dann erheblich werden, wenn durch die Bearbeitung Leerräume oder Einschlüsse freigelegt werden, die eine Kerbwirkung an einer Oberfläche der Stoßstelle verursachen. Durch die stoffschlüssige und homogene Verbindung werden diese Art von ortsabhängigen Unterschiede in den Eigenschaften der Verbindung vorteilhaft vermieden, so dass die Welle mit dem Bearbeitungsschritt vorteilhaft den Anforderungen der elektrischen Maschine angepasst reduziert werden kann. Die Welle kann z.B. vorteilhaft durch spanabhebende Bearbeitung in ihrem Durchmesser verringert werden.

Eine Rotor-Welle-Kombination für eine erfindungsgemäße elektrische Maschine weist auch den weiteren Vorteil auf, dass der Rotor und die Welle als eine Kombination, z.B. in einer Verpackungseinheit, für den Einbau in eine erfindungsgemäße elektrische Maschine zur Verfügung gestellt werden können. Da der Rotor und die Welle in ihrer jeweiligen Beschaffenheit vorteilhaft zur Kostenreduzierung so aufeinander abgestimmt sind, dass nur bei einer bestimmten Konstellation des Rotors und des ersten Abschnitts der Welle die geforderten Belastungen bezüglich Biegung, Torsion und Druck erfüllt werden können, ist es vorteilhaft, die Welle und den Rotor als Kombination zur Verfügung zu stellen. So kann z.B. die Gefahr verringert werden, dass ein für die Belastungen ungeeignetes Rotorpaket auf eine nicht zu dem Rotorpaket gehörenden Welle montiert wird. Bei der Rotor-Welle-Kombination ist der Rotor an dem ersten Abschnitt der Welle befestigt. Insbesondere kann dadurch auch vorteilhaft die Gefahr verringert werden, dass der Rotor in ungeeigneter Weise an dem ersten Abschnitt der Welle befestigt wird.

Eine erfindungsgemäße Serie von elektrischen Maschinen weist auch den weiteren Vorteil auf, dass die Serie kostengünstig elektrische Maschinen umfassen kann, welche die individuellen Anforderungen verschiedenster Branchen und Applikationen an elektrische Maschinen erfüllt. Die Abschnitte der Welle können aus bereits vorliegenden konstruktionstechnisch berechneten und versuchstechnisch erprobten Abschnitten zusammengestellt werden.

Ein erfindungsgemäßes Verfahren zur Herstellung einer erfindungsgemäßen elektrischen Maschine weist auch den weiteren Vorteil auf, dass das stoffschlüssige und homogene Verbinden zu einer hohen Prozesssicherheit führt, die mit einem geringeren Anteil an Ausschuss automatisierbar ist.

Ein nicht zur Erfindung gehörendes Verfahren zur Herstellung einer Serie von elektrischen Maschinen weist auch den weiteren Vorteil auf, dass das Verbindungsverfahren zum Verbinden aller Stoßstellen der Abschnitte der unterschiedlichsten elektrischen Maschinen der Serie verwendet werden kann. Durch die dabei erreichbare hohe Stückzahl, die mit dem Verbindungsverfahren stoffschlüssig und homogen verbunden werden, wird kostengünstig eine Optimierung einer Herstellung mit dem Verbindungsverfahren erreicht. Insbesondere ist für das Verbindungsverfahren nur eine erste Verbindungsvorrichtung notwendig, mit der das Verbindungsverfahren zum Verbinden aller Stoßstellen der Abschnitte der unterschiedlichsten elektrischen Maschinen der Serie durchgeführt werden kann. Somit ist auch vorteilhaft bei geringen Stückzahlen nur die Anschaffung einer Verbindungsvorrichtung als erste Verbindungsvorrichtung notwendig. Weitere Verbindungsvorrichtungen müssen nur bei höheren Stückzahlen angeschafft werden, die mit der ersten Verbindungsvorrichtung nicht mehr rechtzeitig zu den Lieferterminen bewältigt werden können.

Vorteilhafte Ausgestaltungen der Erfindung sind in den abhängigen Ansprüchen angegeben.

Erfindungsgemäß weist der erste Abschnitt der elektrischen Maschine eine axiale Bohrung zum Wärmetransport zwischen dem ersten Material und einem ersten Ende der Welle auf. Es kann so vorteilhaft eine Abwärme der elektrischen Maschine zu deren Kühlung über die axiale Bohrung des ersten Abschnitts der Welle aus dem ersten Material mit einer hohen Wärmeleitfähigkeit, insbesondere des ersten Materials, abgeführt werden. Weiterhin vorteilhaft kann die axiale Bohrung unabhängig von der stoffschlüssigen und homogenen Verbindung angebracht werden.

Der erste Abschnitt wird erfindungsgemäß durch ein vorgefertigtes Rohr gebildet. So kann der erste Abschnitt vorteilhaft kostengünstig als Massenware, insbesondere aus einem Halbzeug, hergestellt werden.

Der erste Abschnitt wird erfindungsgemäß durch ein Strangpressprofil mit dem ersten Material gebildet. Es können so vorteilhaft Anforderungen an die elektrische Maschine und einem Kühlsystem zur Kühlung kostengünstig erfüllt werden, da ein Strangpressprofil ein dichtes Gefüge aufweist. Ein dichtes Gefüge weist eine hohe Wärmeleitfähigkeit auf. Somit wird durch die hohe Wärmeleitfähigkeit vorteilhaft die Abwärme in hohem Maße von dem ersten Material in die axiale Bohrung geführt. Somit kann die erfindungsgemäße elektrische Maschine vorteilhaft kostengünstig eine individuell den Anforderungen angepasste elektrische Maschine zur Verfügung stellen.

Eine erfindungsgemäße elektrische Maschine weist ein Zuflusselement auf, das sich so in die axiale Bohrung erstreckt, dass das Kühlmittel, insbesondere eine Kühlflüssigkeit, aus dem Zuflusselement in die axiale Bohrung fließen kann. So kann die axiale Bohrung vorteilhaft kostengünstig zur Kühlung einer erfindungsgemäßen elektrischen Maschine genutzt werden, um die Anforderungen an die elektrische Maschine zu erfüllen. Das Zuflusselement kann vorteilhaft kostengünstig und einfach relativ zu einer radialen Begrenzungsfläche der axialen Bohrung angeordnet werden. Insbesondere weil eine Verformung der axialen Bohrung aufgrund des stoffschlüssigen und homogenen Verbindens des ersten Materials mit dem zweiten Material vorteilhaft vermieden wird. Die axiale Bohrung ist in einem hohen Maße symmetrisch zur Drehachse, insbesondere auch noch nach dem stoffschlüssigen und homogenen Verbinden des ersten Materials mit dem zweiten Material.

In einer nicht zur Erfindung gehörenden Ausgestaltung einer elektrischen Maschine weist die axiale Bohrung eine Transportstruktur zum Wärmetransport zwischen dem ersten Material und dem ersten Ende der Welle auf. Die stoffschlüssige und homogene Verbindung des ersten Materials und des zweiten Materials an der Stoßstelle ermöglicht es vorteilhaft kostengünstig den Wärmetransport durch eine Transportstruktur zu ermöglichen bzw. zu unterstützen, wenn dies die individuellen Anforderungen an eine elektrische Maschine erfordern. Unter anderem wird eine mechanische Auswirkung auf die Transportstruktur, die durch ortsabhängige Unterschiede in den Eigenschaften der Verbindung auftreten könnte, durch die stoffschlüssige und homogene Verbindung vorteilhaft vermieden. Es wird so z.B. vermieden, dass die Transportstruktur nachteiligen mechanischen Spannungen durch ortsabhängige Unterschiede in den Eigenschaften der Verbindung ausgesetzt ist. Diese nachteiligen mechanischen Spannungen können zu einer geringeren Effektivität der Transportstruktur beim Wärmetransport oder/und zu deren frühzeitigen Ausfall führen. Die nachteiligen mechanischen Spannungen können z.B. zu einem mechanischen Verzug der Transportstruktur führen, der zu einer geringere Effektivität führt. Die Transportstruktur könnte bei nachteiligen mechanischen Spannungen auch weniger kostengünstig hergestellt werden, da die Transportstruktur für diese nachteiligen mechanischen Spannungen ausgelegt werden müsste. So kann vorteilhaft kostengünstig nur der erste Abschnitt der Welle mit der Transportstruktur entsprechend den individuellen Anforderungen der elektrischen Maschine ausgestaltet werden.

Der erste Abschnitt kann in einer nicht zur Erfindung gehörenden Ausgestaltung eine Thermosiphon-Vorrichtung aufweisen, die die axiale Bohrung und die Transportstruktur aufweist. Es kann so vorteilhaft kostengünstig der erste Abschnitt der Welle mit einem autarken Kühlsystem zur Kühlung der elektrischen Maschine ausgestattet werden, wenn die individuellen Anforderungen an die elektrische Maschine dies wünschen.

In einer weiteren vorteilhaften Ausgestaltung einer erfindungsgemäßen elektrischen Maschine weist der zweite Abschnitt eine axiale Bohrung auf, die in die axiale Bohrung des ersten Abschnitts mündet, wobei die axiale Bohrung des zweiten Abschnitts eine Öffnung an einem zweiten Ende der Welle aufweist. So kann vorteilhaft der zweite Abschnitt für eine Zufuhr von kaltem Kühlmittel oder einer Abfuhr von warmem Kühlmittel zur Kühlung der elektrischen Maschine genutzt werden, wobei vorteilhaft der erste Abschnitt individuell gemäß den dort gewünschten Anforderungen kostengünstig ausgestaltet werden kann.

In einer weiteren vorteilhaften Ausgestaltung einer erfindungsgemäßen elektrischen Maschine erstreckt sich das zweite Material an der Stoßstelle von der Drehachse in radialen Richtungen. Indem der erste und der zweite Abschnitt an der Stoßstelle stoffschlüssig und homogen verbunden sind, kann sich das zweite Material an der Stoßstelle vorteilhaft von der Drehachse in radialen Richtungen erstrecken. Somit kann trotz hoher Anforderungen an die elektrische Maschine der zweite Abschnitt kostengünstig aus einem Vollmaterial hergestellt werden. Es muss an dem zweiten Abschnitt an der Stoßstelle keine Ausnehmung angebracht werden, damit die stoffschlüssige und homogene Verbindung die Anforderungen an die Belastung der Welle durch Biegung, Torsion und gegebenenfalls Druck erfüllt.

In einer weiteren vorteilhaften Ausgestaltung einer erfindungsgemäßen elektrischen Maschine sind der erste Abschnitt und der zweite Abschnitt an der Stoßstelle über eine plane Fläche des ersten Abschnitts und eine plane Fläche des zweiten Abschnitts stoffschlüssig und homogen verbunden, wobei die plane Fläche des ersten Abschnitts und die plane Fläche des zweiten Abschnitts jeweils in der axialen Richtung der Drehachse orientiert sind. Die planen Flächen erfordern vorteilhaft kostengünstig keine Bearbeitung der vorgefertigten ersten und zweiten Abschnitte, und ermöglichen vorteilhaft einen gleichmäßigen Energieeintrag in das erste und zweite Material in axialen Richtungen der Welle beim Herstellen der stoffschlüssigen und homogenen Verbindung. Der über die Stoßstelle in radialen Richtungen gleichmäßig verteilte Energieeintrag in die Materialien trägt zu einer homogenen Ausbildung der Verbindung vorteilhaft bei und führt ebenso vorteilhaft zu einer geringeren notwendigen Erwärmung des ersten und des zweiten Materials an der Stoßstelle.

Bei einer vorteilhaften Ausgestaltung eines erfindungsgemäßen Verfahrens zur Herstellung einer erfindungsgemäßen elektrischen Maschine werden in einem Verbindungsverfahren die plane Fläche des ersten Abschnitts und die plane Fläche des zweiten Abschnitts gestoßen.

In einer weiteren vorteilhaften Ausgestaltung einer erfindungsgemäßen elektrischen Maschine weist die Welle in der axialen Richtung der Drehachse aufeinander folgend einen dritten Abschnitt mit einem dritten Material und den ersten Abschnitt auf, wobei das dritte und das erste Material an einer zweiten Stoßstelle des dritten und des ersten Abschnitts stoffschlüssig und homogen verbunden sind. Diese zweite Verbindung des dritten und des ersten Materials an der zweiten Stoßstelle ermöglicht vorteilhaft eine materialunabhängige und formunabhängige Verbindung zwischen dem ersten und dem dritten Abschnitt. Der dritte Abschnitt der Welle kann vorteilhaft gemäß den an den Abschnitten der Welle und der Welle als Ganzes gestellten Anforderungen vorteilhaft ausgestaltet werden, um kostengünstig eine individuell den Anforderungen angepasste elektrische Maschine zur Verfügung zu stellen.

In einer weiteren vorteilhaften Ausgestaltung einer erfindungsgemäßen elektrischen Maschine weist die Welle in dem dritten Abschnitt einen zweiten Lagerabschnitt auf, an dem die zweite Lagervorrichtung zur drehbaren Lagerung der Welle angeordnet ist. Der dritte Abschnitt der Welle kann so vorteilhaft gemäß den individuellen Anforderungen an eine erfindungsgemäße elektrische Maschine bezüglich der zweiten Lagervorrichtung ausgestaltet werden und der erste und der zweite Abschnitt der Welle können vorteilhaft gemäß den an den ersten und zweiten Abschnitt gestellten Anforderungen ausgestaltet werden.

In einer weiteren vorteilhaften Ausgestaltung einer erfindungsgemäßen elektrischen Maschine weist der dritte Abschnitt eine axiale Bohrung zum Wärmetransport zwischen dem ersten Abschnitt und dem ersten Ende der Welle auf. So kann vorteilhaft kostengünstig das erste Ende der Welle einen individuell für ein bestimmtes Kühlsystem gestalteten Anschluss aufweisen.

In einer weiteren vorteilhaften Ausgestaltung der erfindungsgemäßen elektrischen Maschine weist das dritte Material eine geringere Wärmeleitfähigkeit auf als das erste Material. So kann vorteilhaft kostengünstig eine geringere Erwärmung der zweiten Lagervorrichtung, insbesondere des zweiten Lagers, das die zweite Lagervorrichtung aufweist, im Betrieb und nach einem Betrieb der elektrischen Maschine erreicht werden.

Bei einer vorteilhaften Ausgestaltung einer erfindungsgemäßen Serie von elektrischen Maschinen, umfassend mindestens eine elektrische Maschine nach Anspruch 1, weist der erste Abschnitt die erste Form auf, die eine axiale Bohrung zum Wärmetransport zwischen dem ersten Material und einem ersten Ende der ersten Welle aufweist, wobei die erste elektrische Maschine ein Zuflusselement aufweist, das sich so in die axiale Bohrung erstreckt, dass das Kühlmittel, insbesondere eine Kühlflüssigkeit, aus dem Zuflusselement in die axiale Bohrung fließen kann, wobei der vierte Abschnitt die vierte Form aufweist, die eine axiale Bohrung mit einer Transportstruktur zum Wärmetransport zwischen dem vierten Material und einem ersten Ende der zweiten Welle aufweist. So kann vorteilhaft kostengünstig eine Serie von elektrischen Maschinen zur Verfügung gestellt werden, die mindestens eine elektrische Maschine mit einem Kühlsystem mit externer Zuführung des Kühlmittels, insbesondere der Kühlflüssigkeit, und eine elektrisehe Maschine mit einem Kühlsystem, das den Wärmetransport durch eine Transportstruktur ermöglicht bzw. unterstützt, umfasst. Je nach Verfügbarkeit eines Kühlmittels und/oder der Verfügbarkeit von Energie zum Transport des Kühlmittels kann vorteilhaft kostengünstig eine individuell den Anforderungen angepasste elektrische Maschine aus der Serie zur Verfügung gestellt werden. Insbesondere kann auch vorteilhaft eine individuell den Anforderungen angepasste zweite elektrische Maschine mit einem autarken Kühlsystem, z.B. mit einer Thermosiphonvorrichtung, aus der Serie kostengünstig zur Verfügung gestellt werden.

Die Serie von elektrischen Maschinen kann auch vorteilhaft eine dritte elektrische Maschine aufweisen, die eine vorteilhafte Kombination einiger oder mehrerer beschriebener Merkmale aufweist, so dass sich die dritte elektrische Maschine von der ersten elektrischen Maschine und der zweiten elektrischen Maschine unterscheidet.

Eine vorteilhafte Ausgestaltung einer wirkungsvollen Kühlung ist z.B. bei der erfindungsgemäßen elektrischen Maschine vorhanden, bei der der erste Abschnitt durch ein Rohr aus einem Strangpressprofil gebildet ist, das erste Material eine höhere Wärmeleitfähigkeit als das zweite Material aufweist, und sich das zweite Material bevorzugt an der Stoßstelle von der Drehachse in radialen Richtungen erstreckt. So kann kostengünstig mit einem Vollmaterial und einem Rohr eine äußerst wirkungsvolle Kühlung bei einer erfindungsgemäßen elektrischen Maschine erreicht werden. Durch die stoffschlüssige und homogene Verbindung des ersten und zweiten Materials an der Stoßstelle des ersten und zweiten Abschnitts kann vorteilhaft kostengünstig ohne eine Nachbearbeitung innerhalb der axialen Bohrung eine flüssigkeitsdichte Umlenkung einer Kühlflüssigkeit erreicht werden.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: ein Ausführungsbeispiel einer elektrischen Maschine zur Kühlung mit einem Kühlsystem mit externer Zuführung einer Kühlflüssigkeit als Kühlmittel,
- FIG 2: ein Ausführungsbeispiel einer elektrischen Maschine zur Kühlung mit einem Kühlsystem mit externer Zuführung von Luft als Kühlmittel,
- FIG 3: ein Ausführungsbeispiel einer elektrischen Maschine mit einem autarken Kühlsystem,
- FIG 4: ein Ausführungsbeispiel einer Serie von elektrischen Maschinen.

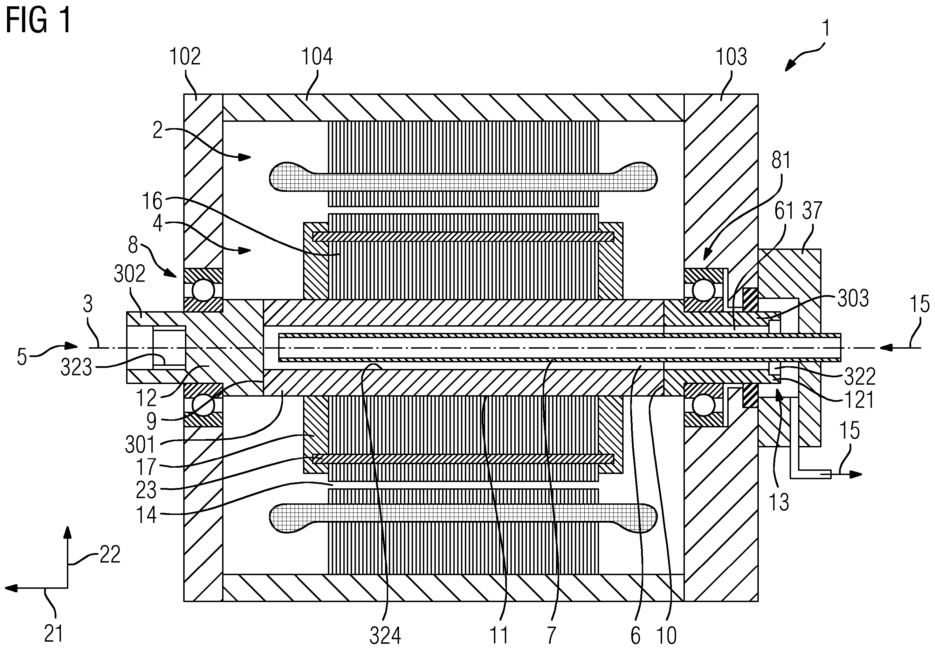

FIG 1 zeigt ein Ausführungsbeispiel einer elektrischen Maschine 1, die einen Stator 2 und einen Rotor 4 umfasst, der im Betrieb der elektrischen Maschine 1 mit dem Stator 2 magnetisch zusammenwirkt. Die elektrische Maschine 1 umfasst weiterhin eine erste Lagervorrichtung 8, eine zweite Lagervorrichtung 81 und eine Welle 5, die in der ersten Lagervorrichtung 8 und in der zweiten Lagervorrichtung 81 um eine Drehachse 3 der Welle 5 drehbar gelagert ist. Die Welle 5 weist in einer axialen Richtung 21 der Drehachse 3 aufeinander folgend einen ersten Abschnitt 301 mit einem ersten Material und einen zweiten Abschnitt 302 mit einem zweiten Material auf, wobei das erste Material und das zweite Material an einer Stoßstelle 9 des ersten Abschnitts 301 und des zweiten Abschnitts 302 stoffschlüssig und homogen verbunden sind. Der Rotor 4 ist an dem ersten Abschnitt 301 der Welle 5 befestigt.

Das erste Material des ersten Abschnitts 301 ist ein Nichteisenmetall mit einer hohen Wärmeleitfähigkeit, wie dies z.B. bei einer hochfesten Aluminiumlegierung der Fall ist. Erfindungsgemäß ist das erste Material AlZn5,5MgCu. In dem Ausführungsbeispiel gemäß der FIG 1 weist die Welle 5 in dem ersten Abschnitt 301 einen Montageabschnitt 11 auf, an dem der Rotor 4 befestigt ist, wobei der Rotor 4 den Montageabschnitt 11 umschließt. Der Rotor 4 umfasst ein Blechpaket 16, das in der axialen Richtung 21 geschichtete Bleche umfasst. Die geschichteten Bleche umfassen jeweils eine Öffnung, durch die der Montageabschnitt 11 der Welle 5 geführt ist. Vorteilhaft umschließen die Bleche den Montageabschnitt 11 in allen radialen Richtungen 22. Der Rotor 4 ist an den Öffnungen der Bleche kraftschlüssig an dem Montageabschnitt 11 befestigt. Die Befestigung des Rotors 4 an dem Montageabschnitt 11 kann dadurch erfolgen, dass der Rotor 4 auf eine höhere Temperatur als der Montageabschnitt 11 erwärmt wird und auf den Montageabschnitt 11 aufgeschoben wird.

Der erste Abschnitt 301 weist erfindungsgemäß eine axiale Bohrung 6 zum Wärmetransport zwischen dem ersten Material und einem ersten Ende 13 der Welle 5 auf. Der erste Abschnitt 301 ist erfindungsgemäß durch ein als Strangpressprofil vorgefertigtes Rohr gebildet. Die elektrische Maschine 1 weist erfindungsgemäß ein Zuflusselement 7 auf, das sich so in die axiale Bohrung 6 erstreckt, dass ein Kühlmittel 15, insbesondere eine Kühlflüssigkeit, aus dem Zuflusselement 7 in die axiale Bohrung 6 fließen kann. Die Fließrichtung des Kühlmittels 15, insbesondere der Kühlflüssigkeit, ist durch Pfeile in FIG 1 angedeutet. Das Zuflusselement 7 ist erfindungsgemäß ein Einlassrohr, das in einem Träger 37 befestigt ist. Der Träger 37 ist erfindungsgemäß an dem Gehäuse 104 der elektrischen Maschine 1 befestigt.

Das Zuflusselement 7 ist relativ zu einer radialen Begrenzungsfläche 324 der axialen Bohrung 6 angeordnet. Die axiale Bohrung 6 ist vorteilhaft in einem hohen Maße symmetrisch zur Drehachse 3, so dass das Zuflusselement 7 optimal in der axialen Bohrung 6 positioniert werden kann. So wird eine Berührung zwischen dem Zuflusselement 7 und einer Berandung der axialen Bohrung 6, insbesondere der radialen Begrenzungsfläche 324 der axialen Bohrung 6, verhindert oder vermindert. Die Berührung kann durch eine Erschütterung, die auf die elektrische Maschine 1 einwirkt, oder/und durch einen Betrieb der elektrischen Maschine 1 hervorgerufen werden. Das stoffschlüssige und homogene Verbinden des ersten und des zweiten Materials an der Stoßstelle 9 des ersten Abschnitts 301 und des zweiten Abschnitts 302 trägt vorteilhaft dazu bei, dass die axiale Bohrung 6 auch noch nach dem Verbinden des ersten Abschnitts 301 und des zweiten Abschnitts 302 in hohem Maße symmetrisch zur Drehachse 3 ist. Der erste und der zweite Abschnitt 301, 302 sind an der Stoßstelle 9 durch orbitales Reibschweißen stoffschlüssig und homogen miteinander verbunden. Das zweite Material des zweiten Abschnitts 302 erstreckt sich an der Stoßstelle 9 von der Drehachse 3 in radialen Richtungen 22. Der zweite Abschnitt 302 kann so an seinem der Stoßstelle 9 zugewandten Ende als Vollmaterial belassen werden. Der erste Abschnitt 301 und der zweite Abschnitt 302 sind an der Stoßstelle 9 über eine plane Fläche des ersten Abschnitts 301 und eine plane Fläche des zweiten Abschnitts 302 stoffschlüssig und homogen verbunden, wobei die plane Fläche des ersten Abschnitts 301 und die plane Fläche des zweiten Abschnitts 302 in der axialen Richtung 21 der Drehachse 3 orientiert sind. Beim stoffschlüssigen und homogenen Verbinden der einander zugewandten planen Flächen des ersten Abschnitts 301 und des zweiten Abschnitts 302, werden die planen Flächen mittels einer zirkularen Kreisschwingbewegung aneinander gerieben. Nachdem das erste und das zweite Material erwärmt und plastifiziert sind, werden der erste und der zweite Abschnitt 301, 302 in der axialen Richtung 21 zueinander positioniert und mittels einer definierten Stauchkraft unter hohem Druck zusammengepresst. Nach dem Erkalten des ersten und des zweiten Materials sind die beiden Materialien an der Stoßstelle 9 des ersten und zweiten Abschnitts 301, 302 stoffschlüssig und homogen miteinander verbunden. Die plane Fläche des vorgefertigten Rohrs, das als erster Abschnitt 301 dient, muss vorteilhaft keiner speziellen Behandlung unterzogen werden, bevor die stoffschlüssige und homogene Verbindung erfolgt. Auch nach dem Verbinden des ersten und des zweiten Abschnitts 301, 302 muss die axiale Bohrung 6 an ihrem Boden, d.h. in der Nähe der Stoßstelle 9, nicht nachbearbeitet werden.

Erfindungsgemäß ist das zweite Material ein Eisenmaterial. Das Eisenmaterial ist bevorzugt ein hochfester Stahl. Der hochfeste Stahl ist in diesem Ausführungsbeispiel 42CrMoS4. Die Welle 5 weist in dem zweiten Abschnitt 302 einen Lagerabschnitt 12 auf, an dem die erste Lagervorrichtung 8 zur drehbaren Lagerung der Welle 5 angeordnet ist. So wird vorteilhaft kostengünstig begrenzt auf den zweiten Abschnitt 302 der Lagerabschnitt 12 mit hoher Festigkeit und Verschleißfestigkeit für eine wechselnde Belastung auf einer Antriebsseite der elektrischen Maschine 1 ausgeführt. Da das zweite Material ein hochfester Stahl ist, kann vorteilhaft kostengünstig an dem zweiten Abschnitt 302 an der Antriebsseite eine Innenverzahnung 323 angebracht sein. Hierdurch weist die elektrische Maschine 1 vorteilhaft bereits einen Teil eines Getriebes auf, der zur Anpassung der kinematischen Größen der elektrischen Maschine 1 an einen anzutreibenden Gegenstand verwendet wird.

Das Ausführungsbeispiel der elektrischen Maschine 1 gemäß der FIG 1 weist zu deren Schutz ein Gehäuse 104 mit einem ersten Lagerschild 102 und einem zweiten Lagerschild 103 auf, wobei in dem Gehäuse 104 der Stator 2 angeordnet ist und der Rotor 4 in einer durchgehenden Ausnehmung 14 des Stator 2 drehbar gelagert ist. Die drehbare Lagerung des Rotors 4 erfolgt über die Welle 5 mit der ersten Lagervorrichtung 8 und der zweiten Lagervorrichtung 81. Die erste Lagervorrichtung 8 ist in dem ersten Lagerschild 102 angeordnet und weist ein Wälzlager auf. Die zweite Lagervorrichtung 81 ist in dem zweiten Lagerschild 103 angeordnet und weist ebenfalls ein Wälzlager auf.

Bei einer elektrischen Maschine 1 gemäß FIG 1 weist die Welle 5 in der axialen Richtung 21 der Drehachse 3 aufeinander folgend einen dritten Abschnitt 303 mit einem dritten Material und den ersten Abschnitt 301 auf, wobei das dritte Material und das erste Material an einer zweiten Stoßstelle 10 des dritten Abschnitts 303 und des ersten Abschnitts 301 stoffschlüssig und homogen verbunden sind. Die Welle 5 weist in dem dritten Abschnitt 303 einen zweiten Lagerabschnitt 121 auf, an dem die zweite Lagervorrichtung 81 zur drehbaren Lagerung der Welle 5 angeordnet ist. Der dritte Abschnitt 303 weist eine axiale Bohrung 61 zum Wärmetransport zwischen dem ersten Abschnitt 301 und dem ersten Ende 13 der Welle 5 auf. So kann vorteilhaft und kostengünstig das erste Ende 13 der Welle 5 einen individuell für ein bestimmtes Kühlsystem gestalteten Anschluss 322 aufweisen. Zusätzlich ergibt sich dadurch vorteilhaft eine Wärmeisolierung der zweiten Lagervorrichtung 81 gegenüber dem Kühlmittel 15, da der dritte Abschnitt 303 durch das dritte Material eine geringere Wärmeleitfähigkeit aufweist als das erste Material. So kann vorteilhaft und kostengünstig eine geringere Erwärmung der zweiten Lagervorrichtung 81, insbesondere des zweiten Lagers, das die zweite Lagervorrichtung 81 aufweist, im Betrieb und nach Betrieb der elektrischen Maschine 1 erreicht werden.

Ein Kühlsystem zur Kühlung einer elektrischen Maschine 1 umfasst die elektrische Maschine 1 und einen Kühlmittelkreislauf zum Transportieren des Kühlmittels 15, insbesondere der Kühlflüssigkeit, durch die axiale Bohrung 6, 61. Bei einem Ausführungsbeispiel eines Kühlsystems für eine elektrische Maschine 1 gemäß FIG 1 umfasst der Kühlmittelkreislauf eine Kühlmittelpumpe zum Transportieren des Kühlmittels 15 von der Kühlmittelpumpe zu einem Kühlmitteleintritt der elektrischen Maschine und von einem Kühlmittelaustritt der elektrischen Maschine zu der Kühlmittelpumpe zurück.

Der Kühlmittelein- und -austritt der elektrischen Maschine 1 sind in FIG 1 durch die Pfeile gekennzeichnet. So kann vorteilhaft das Kühlmittel 15 extern zugeführt werden und unabhängig von einem Betrieb der elektrischen Maschine 1 von der Kühlmittelpumpe bedarfsgerecht transportiert werden. Dabei wird das Kühlmittel 15 durch die Kühlmittelpumpe in das Zuflusselement 7 transportiert. Das Zuflusselement 7 erstreckt sich in der axialen Bohrung 6 in der axialen Richtung 21 bis zu einem Bereich zwischen der ersten Lagervorrichtung 8 und einem hierzu direkt benachbarten Ende des Rotors 4. In diesem Bereich kann das Kühlmittel 15, insbesondere eine Kühlflüssigkeit, aus dem Zuflusselement 7 in die axiale Bohrung 6 fließen und umgelenkt werden, um in der axialen Bohrung 6 zu dem ersten Ende 13 der Welle 5 fließen zu können. Dort kann das Kühlmittel 15, insbesondere die Kühlflüssigkeit, in einen Hohlraum fließen, über den es die elektrische Maschine 1 verlassen kann.

In dem Ausführungsbeispiel der FIG 1 ist am Stator 2 eine Wicklung befestigt, die mit einer entsprechenden Einrichtung des Rotors 4 magnetisch zusammenwirkt. Die Einrichtung des Rotors 4 weist hierfür Kupferstäbe 23 auf, die an beiden Enden des Läuferblechpakets durch Kurzschlussringe 17 mechanisch und elektrisch verbunden sind. Die in dieser Einrichtung im Betrieb der elektrischen Maschine 1 entstehende Abwärme wird zu einem großen Teil über den ersten Abschnitt 301 mit der axialen Bohrung 6 zum ersten Ende 13 der Welle 5 transportiert.

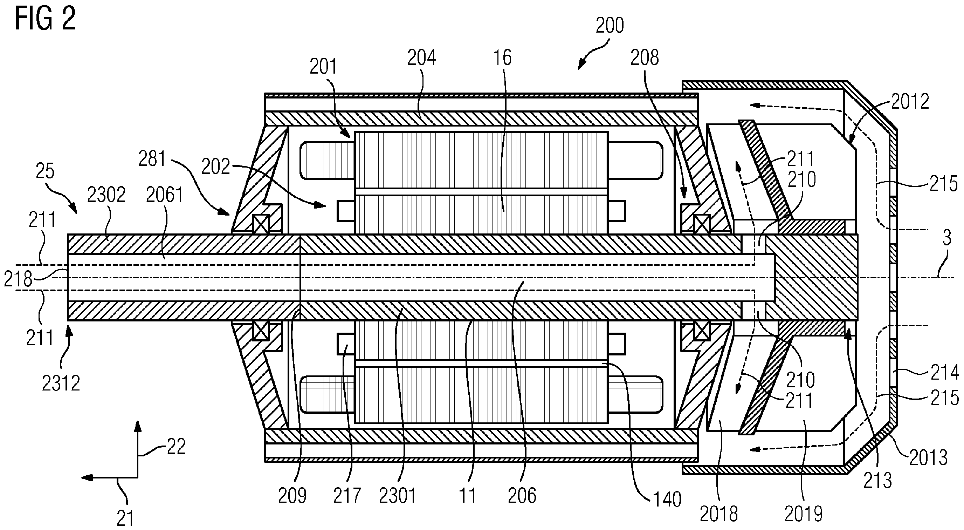

FIG 2 zeigt ein nicht zur Erfindung gehörendes Beispiel einer elektrischen Maschine 200 zur Kühlung mit einem Kühlsystem mit externer Zuführung von Luft als Kühlmittel 211, das durch Pfeile angedeutet ist. Anders als bei FIG 1 weist die elektrische Maschine 200 gemäß FIG 2 einen zweiten Abschnitt 2302 mit einer axialen Bohrung 2061 auf, die in eine axiale Bohrung 206 eines ersten Abschnitts 2301 mündet. Die axiale Bohrung 2061 des zweiten Abschnitts 2302 weist eine Öffnung 218 an einem zweiten Ende 2312 der Welle 25 auf. Der erste Abschnitt 2301 weist an einem ersten Ende 213 der Welle 25 Durchbrüche 210 in radialen Richtungen 22 auf. An dem ersten Ende 213 der Welle 25 ist ein Radiallüfter 2012 befestigt. Die Öffnung 218 kann vorteilhaft zur Kühlung der elektrischen Maschine verwendet werden, indem das kalte Kühlmittel 211 durch die Öffnung 218 in die axialen Bohrungen 2061, 206 des ersten und zweiten Abschnitts 2301, 2302 einströmen kann und das erwärmte Kühlmittel 211 an den Durchbrüchen 210 aus der Welle 25 in radialen Richtungen 22 aus der Welle 5 strömen kann. Das Kühlmittel 211 nimmt dabei im ersten Abschnitt 2301 in der axialen Bohrung 206 Abwärme auf, um diese zu dem ersten Ende 213 der Welle 25 zu transportieren. Das aus den Durchbrüchen 210 strömende Kühlmittel 211 wird unmittelbar durch den Radiallüfter 2012 in radialen Richtungen 22 nach außen gefördert. Die elektrische Maschine 200 weist eine Lüfterhaube 2013 auf, die Durchbrüche 214 aufweist. Der Radiallüfter 2012 fördert zusätzlich zu dem Kühlmittel 211 einen Kühlmittelstrom 215, den der Radiallüfter 2012 von den Durchbrüchen 2014 der Lüfterhaube 213 mit Hilfe von äußeren Lüfterflügeln 2019 über eine Außenseite eines Gehäuses 204 der elektrischen Maschine 200 führt. Der Radiallüfter 2012 weist die äußeren Lüfterflügel 2019 auf und innere Lüfterflügel 2018, die das Kühlmittel 211 von der axialen Bohrung 206 in radialen Richtungen 22 aus den Durchbrüchen 210 fördern können.

In dem Beispiel der FIG 2 ist an einem Stator 201 eine Wicklung befestigt, die mit einer entsprechenden Einrichtung des Rotors 202 magnetisch zusammenwirkt. Die Einrichtung des Rotors 202 weist hierfür Kupferstäbe auf, die an beiden Enden des Läuferblechpakets durch Kurzschlussringe mechanisch und elektrisch verbunden sind. Das Ausführungsbeispiel der elektrischen Maschine 200 gemäß der FIG 2 weist zu deren Schutz ein Gehäuse auf, wobei in dem Gehäuse 204 der Stator 201 angeordnet ist und der Rotor 202 in einer durchgehenden Ausnehmung 140 des Stator 201 drehbar gelagert ist. Die drehbare Lagerung des Rotors 202 erfolgt über die Welle 25 mit einer ersten Lagervorrichtung 281 und der zweiten Lagervorrichtung 208.

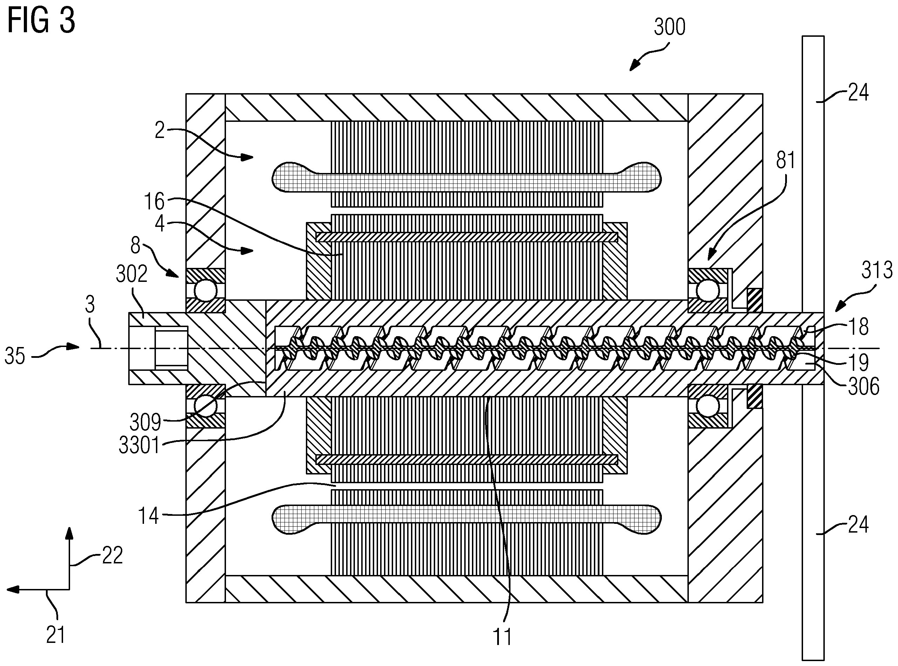

FIG 3 zeigt ein nicht zur Erfindung gehörendes Beispiel einer elektrischen Maschine 300 mit einem autarken Kühlsystem. Bei der elektrischen Maschine 300 weist ein erster Abschnitt 3301 eine axiale Bohrung 306 zum Wärmetransport zwischen dem ersten Material und einem ersten Ende 313 der Welle 35 auf, wobei die axiale Bohrung 306 eine Transportstruktur zum Wärmetransport zwischen dem ersten Material und einem ersten Ende 313 der Welle 35 aufweist. In dem Beispiel der elektrischen Maschine 300 gemäß FIG 3 umfasst die Transportstruktur eine erste Transportstruktur 18 und eine zweite Transportstruktur 19. Die erste Transportstruktur 18 dient zum Transport eines Kondensats eines Kühlmittels innerhalb der axialen Bohrung 306. Die erste Transportstruktur 18 ist somit zum Transport des Kondensats in der axialen Richtung 22. Die zweite Transportstruktur 19 ist für den Transport des Kühlmittels in dampfförmigem Aggregatzustand. Die zweite Transportstruktur 19 ist somit zum Transport des Kühlmittels in dampfförmigem Aggregatzustand in einer der axialen Richtung 22 entgegengesetzten Richtung. Der erste Abschnitt 3301 weist also eine Thermosiphonvorrichtung auf, die die axiale Bohrung 306 und die Transportstruktur aufweist. Mit Hilfe der Thermosiphonvorrichtung wird die Wärme von dem ersten Material, insbesondere an dem Montageabschnitt 11, zu dem ersten Ende 313 der Welle 35 transportiert. Am ersten Ende 313 der Welle 35 wird die Wärme über einen Wärmetauscher 24 an eine Umgebung der elektrischen Maschine 300 abgegeben. In der Thermosiphonvorrichtung wird von einem Kondensat des Kühlmittels Wärme von dem ersten Material, insbesondere am Montageabschnitt 11, aufgenommen. Die aufgenommene Wärme führt zum Verdampfen des Kondensats. Das verdampfte Kondensat wird im dampfförmigen Aggregatzustand zu dem ersten Ende der Welle 35 transportiert, an dem das Kühlmittel Wärme über den Wärmetauscher 24 abgibt und wieder kondensiert. Die erste Transportstruktur 18 ist an einer radialen Begrenzungsfläche der axialen Bohrung 306 angebracht. Die erste Transportstruktur 18 weist in diesem Ausführungsbeispiel eine gewindeartige Struktur auf, so dass das Kühlmittel durch die erste Transportstruktur 18 in die Welle 35 hinein transportiert werden kann. Die erste Transportstruktur 18 befindet sich vorteilhaft an der radialen Begrenzungsfläche, da dort aufgrund von Fliehkräften das Kondensat des Kühlmittels vorhanden ist und dieses dort auch vorteilhaft aufgrund der geringeren Temperatur gegenüber dem dampfförmigen Aggregatzustand des Kühlmittels zur Kühlung eingesetzt werden kann. Die zweite Transportstruktur 19 ist vorteilhaft mittig in der axialen Bohrung angebracht, d.h. in der Nähe der Drehachse 3. Dort ist nämlich das Kühlmittel im dampfförmigen Aggregatzustand vorhanden, so dass die zweite Transportstruktur 19 dort vorteilhaft zum Transport des Kühlmittels von dem ersten Material, insbesondere von dem ersten Montageabschnitt 11, zu dem ersten Ende 313 der Welle 35 beitragen kann. Durch die stoffschlüssige und homogene Verbindung wird ein mechanischer Verzug der Welle 35 und der zweiten Transportstruktur 19 in der Nähe und auf der Drehachse vermieden und damit eine hohe Effektivität der zweiten Transportstruktur 19 erreicht. In dem Beispiel weist die zweite Transportstruktur eine wendelartige Struktur auf, so dass das Kühlmittel durch die zweite Transportstruktur 18 aus der Welle 35 heraus zum ersten Ende 313 der Welle 35 transportiert werden kann. Die Thermosiphonvorrichtung, insbesondere die erste und die zweite Transportstruktur, kann entsprechend den individuellen Anforderungen der elektrischen Maschine 300 ausgestaltet werden, da insbesondere vermieden wird, dass die Transportstruktur nachteiligen mechanischen Spannungen durch ortsabhängige Unterschiede in den Eigenschaften der Verbindung an der Stoßstelle 309 ausgesetzt ist.

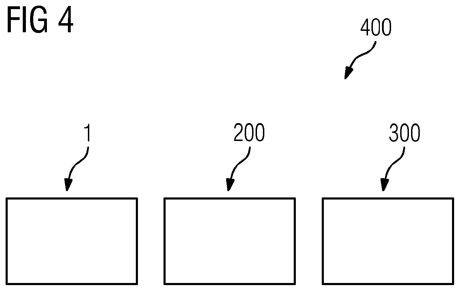

FIG 4 zeigt ein Ausführungsbeispiel einer Serie 400 von elektrischen Maschinen. Die Serie 400 umfasst eine elektrische Maschine 1 gemäß FIG 1, eine elektrische Maschine 200 gemäß FIG 2 und eine elektrische Maschine 300 gemäß FIG 3.

## Patentansprüche

1. Elektrische Maschine (1,200,300) umfassend
- einen Stator (2,201),
- einen Rotor (4,202), der im Betrieb der elektrischen Maschine (1,200,300) mit dem Stator (2,201) magnetisch zusammenwirkt,
- eine erste Lagervorrichtung (8,208),
- eine zweite Lagervorrichtung (81,281) und
- eine Welle (5,25,35), die in der ersten Lagervorrichtung (8,208) und der zweiten Lagervorrichtung (81,281) um eine Drehachse (3) der Welle (5,25,35) drehbar gelagert ist,
- wobei die Welle (5,25,35) in einer axialen Richtung (21) der Drehachse (3) aufeinander folgend einen ersten Abschnitt (301,2301,3301) mit einem ersten Material und einen zweiten Abschnitt (302,2301) mit einem zweiten Material aufweist,
- wobei der Rotor (4,202) an dem ersten Abschnitt (301,2301,3301) der Welle (5,25,35) befestigt ist,
- wobei das zweite Material ein Eisenmaterial ist,
**dadurch gekennzeichnet**, das s
- das erste Material AlZn5,5MgCu ist,
- der erste Abschnitt (301) durch ein als Strangpressprofil vorgefertigtes Rohr gebildet ist,
- der erste Abschnitt (301) eine axiale Bohrung (6) zum Wärmetransport zwischen dem ersten Material und einem ersten Ende (13) der Welle (5) aufweist,
- wobei das erste Material und das zweite Material an einer Stoßstelle (9,209,309) des ersten Abschnitts (301,2301,3301) und des zweiten Abschnitts (302,2302) durch ein orbitales Reibschweißen stoffschlüssig und homogen verbunden sind,
- wobei die elektrische Maschine (1,200,300) ein Zuflusselement (7) aufweist, das sich so in die axiale Bohrung (6) erstreckt, dass ein Kühlmittel (15), insbesondere eine Kühlflüssigkeit, aus dem Zuflusselement (7) in die axiale Bohrung (6) fließen kann,
- wobei das Zuflusselement 7 ein Einlassrohr ist, das in einem Träger (37) befestigt ist
- wobei der Träger (37) an dem Gehäuse (104) der elektrischen Maschine (1,200,300) befestigt ist.

2. Elektrische Maschine (1,200,300) nach Anspruch 1,
wobei der zweite Abschnitt (2302) eine axiale Bohrung (2061) aufweist, die in die axiale Bohrung (206) des ersten Abschnitts (2301) mündet, wobei die axiale Bohrung (2061) des zweiten Abschnitts (2302) eine Öffnung (218) an einem zweiten Ende (2312) der Welle (5,25,35) aufweist.

3. Elektrische Maschine (1,200,300) nach einem der Ansprüche 1 bis 2,
wobei sich das zweite Material an der Stoßstelle (9,209,309) von der Drehachse (3) in radialen Richtungen (22) erstreckt.

4. Elektrische Maschine (1,200,300) nach einem der vorhergehenden Ansprüche,
wobei der erste Abschnitt (301,2301,3301) und der zweite Abschnitt (302,2302) an der Stoßstelle (9,209,309) über eine plane Fläche des ersten Abschnitts (301,2301,3301) und eine plane Fläche des zweiten Abschnitts (302,2302) stoffschlüssig und homogen verbunden sind, wobei die plane Fläche des ersten Abschnitts (301,2301,3301) und die plane Fläche des zweiten Abschnitts (302,2302) in der axialen Richtung (21) der Drehachse (3) orientiert sind.

5. Elektrische Maschine (1,200,300) nach einem der vorhergehenden Ansprüche,
wobei die Welle (5,25,35) in der axialen Richtung (21) der Drehachse (3) aufeinanderfolgend einen dritten Abschnitt (303) mit einem dritten Material und den ersten Abschnitt (301) aufweist, wobei das dritte Material und das erste Material an einer zweiten Stoßstelle (10) des dritten Abschnitts (303) und des ersten Abschnitts (301) stoffschlüssig und homogen verbunden sind.

6. Serie (400) von elektrischen Maschinen (1,200,300) umfassend mindestens eine erste elektrische Maschine (1,200,300) nach einem der Ansprüche 1 bis 5 und mindestens eine zweite elektrische Maschine (1,200,300),
- wobei der erste Abschnitt (301,2301,3301) eine erste Form aufweist,
- wobei die zweite elektrische Maschine (1,200,300),
- einen zweiten Stator (2,201),
- einen zweiten Rotor (4,202), der im Betrieb der zweiten elektrischen Maschine (1,200,300) mit dem zweiten Stator (2,201) magnetisch zusammenwirkt,
- eine dritte Lagervorrichtung (8,208),
- eine vierte Lagervorrichtung (81,281) und
- eine zweite Welle (5,25,35) aufweist, die in der dritten Lagervorrichtung (8,208) und der vierten Lagervorrichtung (81,281) um eine Drehachse (3) der zweiten Welle (5,25,35) drehbar gelagert ist,
- wobei die zweite Welle (5,25,35) in einer axialen Richtung (21) der Drehachse (3) der zweiten Welle (5,25,35) aufeinanderfolgend einen vierten Abschnitt (301,2301,3301) mit einem vierten Material und einen fünften Abschnitt (302,2302) mit einem fünften Material aufweist,
- wobei der vierte Abschnitt (301,2301,3301) eine vierte Form aufweist,
- wobei die vierte Form und/oder das vierte Material verschieden von der ersten Form und/oder dem ersten Material ist.

7. Verfahren zur Herstellung einer elektrischen Maschine (1,200,300) umfassend
- einen Stator (2,201),
- einen Rotor (4,202), der im Betrieb der elektrischen Maschine (1,200,300) mit dem Stator (2,201) magnetisch zusammenwirkt,
- eine erste Lagervorrichtung (8,208),
- eine zweite Lagervorrichtung (81,281) und
- eine Welle (5,25,35), die in der ersten Lagervorrichtung (8,208) und der zweiten Lagervorrichtung (81,281) um eine Drehachse (3) der Welle (5,25,35) drehbar gelagert ist,
- wobei die Welle (5,25,35) in einer axialen Richtung (21) der Drehachse (3) aufeinander folgend einen ersten Abschnitt (301,2301,3301) mit einem ersten Material und einen zweiten Abschnitt (302,2301) mit einem zweiten Material aufweist,
- wobei der Rotor (4,202) an dem ersten Abschnitt (301,2301,3301) der Welle (5,25,35) befestigt ist,
- wobei das zweite Material ein Eisenmaterial ist,
**dadurch gekennzeichnet**, das s
- das erste Material AlZn5,5MgCu ist,
- der erste Abschnitt (301) durch ein als Strangpressprofil vorgefertigtes Rohr gebildet ist,
- der erste Abschnitt (301) eine axiale Bohrung (6) zum Wärmetransport zwischen dem ersten Material und einem ersten Ende (13) der Welle (5) aufweist,
- wobei die elektrische Maschine (1) ein Zuflusselement (7) aufweist, das sich so in die axiale Bohrung (6) erstreckt, dass ein Kühlmittel (15), insbesondere eine Kühlflüssigkeit, aus dem Zuflusselement (7) in die axiale Bohrung (6) fließen kann,
- wobei das Zuflusselement 7 ein Einlassrohr ist, das in einem Träger (37) befestigt ist
- wobei der Träger (37) an dem Gehäuse (104) der elektrischen Maschine (1) befestigt ist
wobei das erste Material und das zweite Material an einer Stoßstelle (9,209,309) des ersten Abschnitts (301,2301,3301) und des zweiten Abschnitts (302,2302) durch ein orbitales Reibschweißen stoffschlüssig und homogen verbunden werden.

## Claims

1. Electric machine (1, 200, 300) comprising
- a stator (2, 201),
- a rotor (4, 202), which, during operation of the electric machine (1, 200, 300), interacts magnetically with the stator (2, 201),
- a first bearing device (8, 208),
- a second bearing device (81, 281) and
- a shaft (5, 25, 35), which, in the first bearing device (8, 208) and the second bearing device (81, 281), is mounted rotatably about an axis of rotation (3) of the shaft (5, 25, 35),
- wherein in an axial direction (21) of the axis of rotation (3) the shaft (5, 25, 35) has a first segment (301, 2301, 3301) with a first material and a second segment (302, 2301) with a second material which follow one another consecutively,
- wherein the rotor (4, 202) is fastened to the first segment (301, 2301, 3301) of the shaft (5, 25, 35),
- wherein the second material is an iron material, **characterised in that**
- the first material is AlZn5,5MgCU,
- the first segment (301) is formed by a pipe prefabricated as an extrusion press profile,
- the first segment (301) has an axial borehole (6) for transporting heat between the first material and a first end (13) of the shaft (5),
- wherein the first material and the second material are connected with a material bond and homogenously at a joint (9, 209, 309) of the first segment (301, 2301, 3301) and the second segment (302, 2302) by means of an orbital friction welding,
- wherein the electric machine (1, 200, 300) has an inflow element (7), which extends into the axial borehole (6) so that a coolant (15), in particular a cooling liquid, can flow out of the inflow element (7) into the axial borehole (6),
- wherein the inflow element 7 is an inlet pipe, which is fastened in a carrier (37),
- wherein the carrier (37) is fastened to the housing (104) of the electric machine (1, 200, 300).

2. Electric machine (1, 200, 300) according to claim 1, wherein the second segment (2302) has an axial borehole (2061), which leads into the axial borehole (206) of the first segment (2301), wherein the axial borehole (2061) of the second segment (2302) has an opening (218) at a second end (2312) of the shaft (5, 25, 35).

3. Electric machine (1, 200, 300) according to one of claims 1 to 2,
wherein the second material at the joint (9, 209, 309) extends from the axis of rotation (3) in radial directions (22).

4. Electric machine (1, 200, 300) according to one of the preceding claims, wherein the first segment (301, 2301, 3301) and the second segment (302, 2302) are connected with a material bond and homogenously at the joint (9, 209, 309) via a planar surface of the first segment (301, 2301, 3301) and a planar surface of the second segment (302, 2302), wherein the planar surface of the first segment (301, 2301, 3301) and the planar surface of the second segment (302, 2302) are oriented in the axial direction (21) of the axis of rotation (3).

5. Electric machine (1, 200, 300) according to one of the preceding claims, wherein in the axial direction (21) of the axis of rotation (3), the shaft (5, 25, 35) has a third segment (303) with a third material and the first segment (301) which follow one another, wherein the third material and the first material are connected with a material bond and homogenously at a second joint (10) of the third segment (303) and of the first segment (301).

6. Series (400) of electric machines (1, 200, 300) comprising at least one first electric machine (1, 200, 300) according to one of claims 1 to 5 and at least one second electric machine (1, 200, 300),
- wherein the first segment (301, 2301, 3301) has a first shape,
- wherein the second electric machine (1, 200, 300) has
- a second stator (2, 201),
- a second rotor (4, 202), which interacts magnetically with the second stator (2, 201) during operation of the second electric machine (1, 200, 300),
- a third bearing device (8, 208),
- a fourth bearing device (81, 281) and
- a second shaft (5, 25, 35), which is mounted rotatably about an axis of rotation (3) of the second shaft (5, 25, 35) in the third bearing device (8, 208) and the fourth bearing device (81, 281),
- wherein in an axial direction (21) of the axis of rotation (3) of the second shaft (5, 25, 35), the second shaft (5, 25, 35) has a fourth segment (301, 2301, 3301) with a fourth material and a fifth segment (302, 2302) with a fifth material which follow one another,
- wherein the fourth segment (301, 2301, 3301) has a fourth shape,
- wherein the fourth shape and/or the fourth material differ from the first shape and/or the first material.

7. Method for producing an electric machine (1, 200, 300) comprising
- a stator (2, 201),
- a rotor (4, 202), which interacts magnetically with the stator (2, 201) during operation of the electric machine (1, 200, 300),
- a first bearing device (8, 208),
- a second bearing device (81, 281) and
- a shaft (5, 25, 35) which, in the first bearing device (8, 208) and the second bearing device (81, 281), is mounted rotatably about an axis of rotation (3) of the shaft (5, 25, 35),
- wherein in an axial direction (21) of the axis of rotation (3) the shaft (5, 25, 35) has a first segment (301, 2301, 3301) with a first material and a second segment (302, 2301) with a second material which follow one another,
- wherein the rotor (4, 202) is fastened to the first segment (301, 2301, 3301) of the shaft (5, 25, 35),
- wherein the second material is an iron material, **characterised in that**
- the first material is AlZn5,5MgCu,
- the first segment (301) is formed by a pipe prefabricated as an extrusion press profile,
- the first segment (301) has an axial borehole (6) for transporting heat between the first material and a first end (13) of the shaft (5),
- wherein the electric machine (1) has an inflow element (7), which extends into the axial borehole (6) so that a coolant (15), in particular a cooling liquid, can flow out of the inflow element (7) into the axial borehole (6),
- wherein the inflow element 7 is an inlet pipe, which is fastened in a carrier (37),
- wherein the carrier (37) is fastened to the housing (104) of the electric machine (1)
wherein the first material and the second material are connected with a material bond and homogenously at a joint (9, 209, 309) of the first segment (301, 2301, 3301) and of the second segment (302, 2302) by means of an orbital friction welding.

## Revendications

1. Machine (1, 200, 300) électrique, comprenant
- un stator (2, 201),
- un rotor (4, 202), qui, lorsque la machine (1, 200, 300) est en fonctionnement, coopère magnétiquement avec le stator (2, 201),
- un premier système (8, 208) de palier,
- un deuxième système (81, 281) de palier et
- un arbre (5, 25, 35), qui est monté tournant autour d'un axe (3) de rotation de l'arbre (5, 25, 35) dans le premier système (8, 208) de palier et dans le deuxième système (81, 281) de palier,
- dans laquelle l'arbre (5, 25, 35) a, dans une direction (21) axiale de l'axe (3) de rotation, en succession, un premier tronçon (301, 2301, 3301) en un premier matériau et un deuxième tronçon (302, 2302) en un deuxième matériau,
- dans laquelle le rotor (4, 202) est fixé au premier tronçon (301, 2301, 3301) de l'arbre (5, 25, 35),
- dans laquelle le deuxième matériau est un matériau de fer, **caractérisée en ce que**
- le premier matériau est AlZn5, 5MgCu,
- le premier tronçon (301) est formé d'un tuyau préfabriqué sous la forme d'un profilé filé à la presse,
- le premier tronçon (301) a un trou (6) axial pour le transport de la chaleur entre le premier matériau et un premier bout (13) de l'arbre (5),
- dans laquelle le premier matériau et le deuxième matériau sont reliés à coopération de matière et de manière homogène par un soudage à friction orbitale en un point (9, 209, 309) d'aboutement du premier tronçon (301, 2301, 3301) et du deuxième tronçon (302, 2302),
- dans laquelle la machine (1, 200, 300) électrique a un élément (7) d'afflux, qui s'étend dans le trou (6) axial, de manière à ce qu'un fluide (15) de refroidissement, notamment un liquide de refroidissement, puisse s'écouler de l'élément (7) d'afflux au trou (6) axial,
- dans laquelle l'élément (7) d'afflux est un tuyau d'entrée, qui est fixé à un support (37),
- dans laquelle le support (37) est fixé à la carcasse (104) de la machine (1, 200, 300) électrique.

2. Machine (1, 200, 300) électrique suivant la revendication 1,
dans laquelle le deuxième tronçon (2302) a un trou (2061) axial, qui débouche dans le trou (206) axial du premier tronçon (2301), le trou (2031) axial du deuxième tronçon (2302) ayant une ouverture (218) a un second bout (2312) de l'arbre (5, 25, 35).

3. Machine (1, 200, 300) électrique suivant l'une des revendications 1 à 2,
dans laquelle le deuxième matériau s'étend au point (9, 209, 309) d'aboutement dans des directions (22) radiales à partir de l'axe (3) de rotation.

4. Machine (1, 200, 300) électrique suivant l'une des revendications précédentes,
dans laquelle le premier tronçon (301, 2301 3301) et le deuxième tronçon (302, 2302) sont reliés à coopération de matière et de manière homogène au point (9, 209, 309) d'aboutement par l'intermédiaire d'une surface plane du premier tronçon (301, 2301, 3301) et d'une surface plane du deuxième tronçon (302, 2302), la surface plane du premier tronçon (301, 2301, 3301) et la surface plane du deuxième tronçon (302, 2302) étant orientées dans la direction (21) axiale de l'axe (3) de rotation.

5. Machine (1, 200, 300) électrique suivant l'une des revendications précédentes,
dans laquelle l'arbre (25, 25, 35) a, dans la direction (21) axiale de l'axe (3) de rotation, en succession, un troisième tronçon (303) en un troisième matériau et le premier tronçon (301), le troisième matériau et le premier matériau étant reliés à coopération de matière et d'une manière homogène en un deuxième point (10) d'aboutement du troisième tronçon (303) et du premier tronçon (301).

6. Série (400) de machines (1, 200, 300) électriques, comprenant au moins une première machine (1, 200, 300) électrique suivant l'une des revendications 1 à 5 et au moins une deuxième machine (1, 200, 300) électrique,
- dans laquelle le premier tronçon (301, 2301, 3301) a une première forme,
- dans laquelle la deuxième machine (1, 200, 300) électrique comprend
- un deuxième stator (2, 201),
- un deuxième rotor (4, 202), qui, lorsque la deuxième machine (1, 200, 300) électrique est en fonctionnement, coopère magnétiquement avec le deuxième stator (2, 201),
- un troisième système (8, 208) de palier,
- un quatrième système (81, 281) de palier et
- un deuxième arbre (5, 25, 35), qui est monté tournant autour d'un axe (3) de rotation du deuxième arbre (5, 25, 35) dans le troisième dispositif (8, 208) de palier et dans le quatrième dispositif (81, 281) de palier,
- dans laquelle le deuxième arbre (5, 25, 35) a, dans une direction (21) axiale de l'axe (3) de rotation du deuxième arbre (5, 25, 35), en succession, un quatrième tronçon (301, 2301, 3301) en un quatrième matériau et un cinquième tronçon (302, 2302) en un cinquième matériau,
- dans laquelle le quatrième tronçon (301, 2301, 3301) a une quatrième forme,
- dans laquelle la quatrième forme et/ou le quatrième matériau est différent de la première forme et/ou du premier matériau.

7. Procédé de fabrication d'une machine (1, 200, 300) électrique, comprenant
- un stator (2, 201),
- un rotor (4, 202), qui, lorsque la machine (1, 200, 300) est en fonctionnement, coopère magnétiquement avec le stator (2, 201),
- un premier système (8, 208) de palier,
- un deuxième système (81, 281) de palier et
- un arbre (5, 25, 35), qui est monté tournant autour d'un axe (3) de rotation de l'arbre (5, 25, 35) dans le premier système (8, 208) de palier et dans le deuxième système (81, 281) de palier,
- dans lequel l'arbre (5, 25, 35) a, dans une direction (21) axiale de l'axe (3) de rotation, en succession, un premier tronçon (301, 2301, 3301) en un premier matériau et un deuxième tronçon (302, 2302) en un deuxième matériau,
- dans lequel le rotor (4, 202) est fixé au premier tronçon (301, 2301, 3301) de l'arbre (5, 25, 35),
- dans lequel le deuxième matériau est un matériau de fer, **caractérisé en ce que**
- le premier matériau est AlZn5, 5MgCu,
- le premier tronçon (301) est formé d'un tuyau préfabriqué sous la forme d'un profilé filé à la presse,
- le premier tronçon (301) a un trou (6) axial pour le transport de la chaleur entre le premier matériau et un premier bout (13) de l'arbre (5),
- dans lequel le premier matériau et le deuxième matériau sont reliés à coopération de matière et de manière homogène par un soudage à friction orbitale en un point (9, 209, 309) d'aboutement du premier tronçon (301, 2301, 3301) et du deuxième tronçon (302, 2302),
- dans lequel la machine (1, 200, 300) électrique a un élément (7) d'afflux, qui s'étend dans le trou (6) axial, de manière à ce qu'un fluide (15) de refroidissement, notamment un liquide de refroidissement, puisse s'écouler de l'élément (7) d'afflux au trou (6) axial,
- dans lequel l'élément (7) d'afflux est un tuyau d'entrée, qui est fixé à un support (37),
- dans lequel le support (37) est fixé à la carcasse (104) de la machine (1, 200, 300) électrique,
dans lequel on relie le premier matériau et le deuxième matériau à coopération de matière et d'une manière homogène par un soudage à friction orbitale en un point (9, 209, 309) d'aboutement du premier tronçon (301, 2301, 3301) et du deuxième tronçon (302, 2302).
